# EUROPÄISCHE PATENTSCHRIFT

(11) **EP 3 676 737 B1**
(45) Veröffentlichungstag und Bekanntmachung des Hinweises auf die Patenterteilung: **11.09.2024**
(21) Anmeldenummer: 18786272.7
(22) Anmeldetag: 10.10.2018
(51) Int. Cl.: G06F 21/31

(54) **MEHRBENUTZER-TESTSYSTEM UND VERFAHREN ZUR KONFIGURATION EINES MEHRBENUTZER-TESTSYSTEMS**
MULTI-USER TEST SYSTEM AND METHOD FOR CONFIGURING A MULTI-USER TEST SYSTEM
SYSTÈME DE TEST MULTI-UTILISATEURS ET PROCÉDÉ DE CONFIGURATION D'UN SYSTÈME DE TEST MULTI-UTILISATEURS

(30) Priorität: 12.10.2017 DE 102017218296
(43) Veröffentlichungstag der Anmeldung: 08.07.2020
(73) Patentinhaber: Rohde & Schwarz GmbH & Co. KG, 81671 München (DE)
(72) Erfinder: CIRILLO, Luke, 85586 Poing (DE)
(74) Vertreter: Novagraaf Group
(86) Internationale Anmeldenummer: PCT/EP2018/077591
(87) Internationale Veröffentlichungsnummer: WO 2019/072910

(56) Entgegenhaltungen:
- DE-A1- 102005 042 830
- DE-A1- 102014 007 882
- US-A1- 2014 189 851
- US-A1- 2015 205 623

## Beschreibung

Die vorliegende Erfindung betrifft ein Mehrbenutzer-Testsystem sowie ein Verfahren zur Konfiguration eines Mehrbenutzer-Testsystems.

### Stand der Technik

US 2014/189851 A1 beschreibt ein System zur zerstörungsfreien Prüfung von zu vermessenden Objekten oder Einrichtungen für eine Inspektion oder Wartung der Objekte. Von einer Cloud oder einem entfernten Computer werden Benutzer-Einstellungen in ein Messsystem geladen. Die dann erfassten Messdaten können dann von einer Vielzahl von Benutzern analysiert werden, Berichte dazu können erstellt werden und mit anderen Benutzern geteilt werden. Somit wird die Inspektion oder Wartung der Objekte oder Einrichtungen effizienter.

DE 10 2005 042830 A1 beschreibt eine Vorrichtung zur benutzerspezifischen Einstellung von fahrzeuginternen Funktionen.

DE 10 2014 007882 A1 beschreibt ein Verfahren zum benutzerspezifischen Einstellen von Fahrzeugeinrichtungen, wobei ein Datensatz eine benutzerspezifische Konfiguration repräsentieren kann.

US 2015/205623 A1 beschreibt ein elektronisches Gerät, dessen Konfigurationen unter Verwendung biometrischer Daten eines Benutzers angepasst werden können.

Obwohl die vorliegende Erfindung auf ein beliebiges Mehrbenutzer-Testsystem anwendbar ist, wird die vorliegende Erfindung und ihr zugrundeliegendes Problem im Nachfolgenden in Zusammenhang mit einer elektrischen Messvorrichtung, wie z.B. einem Netzwerkanalysator, beschrieben.

Moderne elektronische Testsysteme verfügen über eine Vielzahl von zum Teil sehr komplexen Konfigurationsmöglichkeiten. So können beispielsweise an einem Gerät wie einem Netzwerkanalysator eine Vielzahl von verschiedenen Parametern konfiguriert werden. Darüber hinaus besteht auch die Möglichkeit, gerade bei komplexen Anzeigen auf einem solchen Testgerät auch die graphische Benutzerschnittstelle an die Wünsche und Bedürfnisse eines Benutzers individuell anzupassen. Hierzu sind in der Regel aufwendige und auch zeitintensive Konfigurationen der jeweiligen Geräte erforderlich.

Da derartige moderne und komplexe Testgeräte jedoch in der Regel sehr teuer sind, stehen diese Geräte in der Regel nur in begrenzter Stückzahl zur Verfügung. Für eine effektive Ausnutzung der Geräte werden die Geräte daher in vielen Fällen von mehreren Benutzern gemeinsam genutzt. Die einzelnen Benutzer können dabei mit ein und demselben Gerät unterschiedliche Prüfvorgänge ausführen, die entsprechend auch unterschiedliche Einstellungen eines Geräts erfordern. Darüber hinaus können die unterschiedlichen Benutzer auch unterschiedliche Bedürfnisse bezüglich der Konfiguration einer graphischen Benutzerschnittstelle oder ähnlichem haben.

Aufgrund der Komplexität der Geräte erfordert daher die Einstellung des jeweiligen Geräts bei einem Wechsel des Benutzers jeweils einen großen Aufwand.

Vor diesem Hintergrund ist es eine Aufgabe der vorliegenden Erfindung eine möglichst einfache, schnelle und zuverlässige Konfiguration eines Mess- und Prüfgeräts zu ermöglichen um die unterschiedlichen Bedürfnisse verschiedener Benutzer zu berücksichtigen.

### Offenbarung der Erfindung

Die vorliegende Erfindung offenbart ein Mehrbenutzer- und ein Verfahren zur Konfiguration eines Mehrbenutzer-Testsystems mit den Merkmalen der unabhängigen Patentansprüche. Weiter vorteilhafte Ausführungsformen sind Gegenstand der abhängigen Patentansprüche.

Demgemäß ist vorgesehen:
Ein Mehrbenutzer-Testsystem mit einer Mess- und Prüfeinrichtung, einer Authentifizierungseinrichtung, einer Profildatenbank und einer Steuereinrichtung. Die Mess- und Prüfeinrichtung ist dazu ausgelegt, vorbestimmte Mess- und Prüfoperationen auszuführen. Die Authentifizierungseinrichtung ist dazu ausgelegt, einen Benutzer zu authentifizieren. Die Profildatenbank ist dazu ausgelegt, Benutzerprofile, welche Einstellungen, Parametrisierungen und/oder Konfigurationen des jeweiligen Benutzers auf der Mess- und Prüfeinrichtung (1) umfassen, abzuspeichern und bereitzustellen. Die Steuereinrichtung ist dazu ausgelegt, ein Benutzerprofil für einen authentifizierten Benutzer zu erstellen und in der Profildatenbank abzuspeichern. Weiterhin ist die Steuereinrichtung dazu ausgelegt, ein Benutzerprofil für einen authentifizierten Benutzer aus der Profildatenbank auszulesen und daraufhin automatisch die Mess- und Prüfeinrichtung unter Verwendung des ausgelesenen Benutzerprofils einzustellen.

### Weiterhin ist vorgesehen:

Ein Verfahren zur Konfiguration eines Mehrbenutzer-Testsystems. Das Verfahren umfasst die Schritte des Authentifizierens eines Benutzers, des Auslesens eines Benutzerprofils des authentifizierten Benutzers, welches Einstellungen, Parametrisierungen und/oder Konfigurationen des jeweiligen Benutzers auf der Mess- und Prüfeinrichtung umfasst, insbesondere aus einer Profildatenbank, und des Einstellens einer Mess- und Prüfeinrichtung unter Verwendung des ausgelesenen Benutzerprofils. Insbesondere erfolgt das Einstellen der Mess- und Prüfeinrichtung automatisch nach der Authentifizierung des Benutzers.

Der vorliegenden Erfindung liegt die Erkenntnis zugrunde, dass moderne Mess- und Prüfeinrichtungen in der Regel eine Vielzahl von komplexen Konfigurations- und Einstellmöglichkeiten bieten. Hierbei können mehrere Benutzer bei der Bedienung ein und desselben Geräts ggf. unterschiedliche Anforderungen an die Konfiguration, Parametrisierung und Einstellung der Mess- und Prüfeinrichtung haben. Insbesondere bestehen für mehrere Benutzer ggf. unterschiedliche Vorlieben oder Anforderungen bezüglich einer Darstellung der graphischen Benutzerschnittstelle einer solchen Mess- und Prüfeinrichtung. Aufgrund der Vielzahl von Einstell- und Konfigurationsmöglichkeiten stellt dabei ein Wechsel eines Benutzers und die damit verbundenen Rekonfigurationsaufgaben einen großen zeitlichen Aufwand dar, der ggf. auch mit einer Vielzahl von Fehlerquellen verbunden sein kann.

Der vorliegenden Erfindung liegt daher die Idee zugrunde, dieser Erkenntnis Rechnung zu tragen und eine einfache, schnelle und zuverlässige Konfiguration einer Mess- und Prüfeinrichtung in einem Mehrbenutzer-Testsystem zu ermöglichen. Hierzu ist es vorgesehen, den einzelnen Benutzern des Mehrbenutzer-Testsystems individuelle Benutzerprofile zuzuweisen, welche die Einstellungen und Konfigurationen des jeweiligen Benutzers auf einer oder mehreren Mess- und Prüfeinrichtungen umfassen. Diese können in einer lokalen oder zentralen Profildatenbank abgelegt werden und bei Bedarf wieder aufgerufen werden.

Die Individualisierung der in der Profildatenbank abgespeicherten Benutzerprofile ist dabei mit einer Authentifizierung eines Benutzers verknüpft. Durch eine solche Authentifizierung der Benutzer kann gewährleistet werden, dass die in der Profildatenbank gespeicherten Benutzerprofile jeweils den korrekten Benutzern zugewiesen werden und nicht versehentlich oder absichtlich durch andere Benutzer verändert oder manipuliert werden.

Die Komponenten des Mehrbenutzer-Testsystems, insbesondere die Mess- und Prüfeinrichtung, die Authentifizierungseinrichtung, die Profildatenbank und die Steuereinrichtung können dabei in einer gemeinsamen Einheit, insbesondere in einem gemeinsamen Gerät vorgesehen sein. Darüber hinaus ist es jedoch auch möglich, dass eine oder mehrere der Komponenten räumlich verteilt an unterschiedlichen Orten angeordnet sind. Insbesondere kann beispielsweise auch eine gemeinsame Profildatenbank für eine beliebige Anzahl von einer oder mehreren Mess- und Prüfeinrichtungen vorgesehen sein. Die einzelnen Komponenten des Mehrbenutzer-Testsystems können beispielsweise über geeignete Schnittstellen miteinander kommunizieren. Hierbei sind kabelgebundene Kommunikationswege ebenso möglich wie eine kabellose Kommunikation über geeignete Funkschnittstellen. So ist insbesondere beispielsweise eine kabellose Kommunikation mittels WLAN, Mobilfunk, Bluetooth oder einem beliebigen anderen kabellosen Kommunikationsstandard möglich.

Bei der Mess- und Prüfeinrichtung kann es sich um eine beliebige Einrichtung handeln, welche Messvorgänge ausführen und/oder Testsignale bereitstellen kann. Insbesondere kann die Mess- und Prüfeinrichtung beispielsweise beliebige elektrische, elektromagnetische und/oder optische Signale erfassen und auswerten. Ferner kann die Mess- und Prüfeinrichtung ebenso beliebige elektrische, elektromagnetische und/oder optische Signale erzeugen und aussenden. Darüber hinaus sind ebenso beliebige weitere Mess- und Prüfeinrichtungen zur Durchführung von Testoperationen, insbesondere zu elektrischen oder elektromagnetischen Tests möglich.

Die in der Profildatenbank abgespeicherten Benutzerprofile können beliebige Informationen umfassen, welche in Zusammenhang mit einer Konfiguration, Parametrisierung oder Einstellung der Mess- und Prüfeinrichtung stehen. Beispielsweise kann in einem Benutzerprofil eine vollständige Konfiguration einer Mess- und Prüfeinrichtung abgespeichert werden, wie sie zu einem früheren Zeitpunkt durch einen Benutzer eingestellt worden ist. Darüber hinaus kann das Benutzerprofil ggf. auch nur eine Konfiguration einer graphischen Benutzerschnittstelle umfassen, im die graphische Benutzerschnittstell an die Gepflogenheiten des Benutzers anzupassen. Ferner kann das Benutzerprofil ggf. auch Vorschriften für komplexe Messabläufe, beispielsweise in Form eines Skripts oder ähnlichem umfassen. Auch sind ggf. benutzerspezifisch definierte Algorithmen oder Rechenvorschriften in einem Benutzerprofil definierbar, welche durch einen Benutzer vorgegeben worden sind. Darüber hinaus können in einem Benutzerprofil bei Bedarf auch ggf. benutzerspezifische Einschränkungen oder Begrenzungen vorgegeben werden. So können z.B. in dem Benutzerprofil individuell einzelne Funktionen der Mess- und Prüfeinrichtung freigegeben, begrenzt oder unterbunden werden. Auf diese Weise können beispielsweise für einen noch unerfahrenen Benutzer engere Vorgaben definiert werden, um eventuell mögliche Beschädigungen der Mess- und Prüfeinrichtung oder eines Testobjekts zu vermeiden. Auch können ggf. aus Lizenzgründen einzelne Funktionen benutzerspezifisch limitiert werden. Darüber hinaus sind selbstverständlich beliebige andere Einschränkungen, Parametrisierungen oder Definitionen in den Benutzerprofilen für einen jeweiligen Benutzer möglich.

Die Steuereinrichtung des Mehrbenutzer-Testsystems kann insbesondere automatisch nach einer Authentifizierung eines neuen Benutzers das jeweilige Benutzerprofil aus der Profildatenbank auslesen und daraufhin unmittelbar eine Konfiguration der Mess- und Prüfeinrichtung vornehmen. Auf diese Weise findet ein Benutzer sofort nach seiner Authentifizierung die Mess- und Prüfeinrichtung in seiner gewohnten Form mit den erforderlichen Einstellungen vor, ohne dass weitere Interaktionen erforderlich wären. Gegebenenfalls können für einen Benutzer auch mehrere Benutzerprofile oder mehrere verschiedene Einstellungen innerhalb eines Benutzerprofils definiert werden. In diesem Fall können dem Benutzer unmittelbar nach der Authentifizierung die möglichen Einstellungsvarianten angezeigt werden, sodass ein Benutzer nur aus diesen Einstellungsvarianten auswählen muss, um sofort zu der gewünschten Konfiguration der Mess- und Prüfeinrichtung zu gelangen.

Darüber hinaus werden die Einstellungen eines Benutzers automatisch in dem in der Profildatenbank abgespeicherten Benutzerprofil abgespeichert. So erfolgt bei einem Abmelden eines authentifizierten Benutzers automatisch eine Abspeicherung der aktuellen Konfiguration in dem Benutzerprofil. Auch bei einem Wechsel des Benutzers, d.h. bei der Authentifizierung eines neuen Benutzers kann ggf. automatisch eine Abspeicherung der Konfiguration des zuvor angemeldeten und authentifizierten Benutzers erfolgen. Darüber hinaus ist auch eine beliebige andere automatische Abspeicherung der Konfigurationsdaten, beispielsweise zu vorbestimmten Zeitpunkten, innerhalb vorbestimmter Zeitintervalle oder ähnlichem möglich. Es versteht sich, dass das Auslesen und Abspeichern der Benutzerprofile aus der Benutzerdatenbank nicht auf die zuvor beschriebenen Beispiele beschränkt ist.

Weitere Ausführungsformen der vorliegenden Erfindung sind Gegenstand der Unteransprüche und der nachfolgenden Beschreibung unter Bezug auf die beigefügten Zeichnungen.

In einer möglichen Ausführungsform ist die Steuereinrichtung dazu ausgelegt, nach einer Authentifizierung des Benutzers das Benutzerprofil des authentifizierten Benutzers automatisch auszulesen und die Mess- und Prüfeinrichtung unter Verwendung des ausgelesenen Benutzerprofils einzustellen.

Hierbei ist die Authentifizierung des Benutzers unmittelbar mit der Konfiguration der Mess- und Prüfeinrichtung verknüpft, sodass sofort nach der Authentifizierung des Benutzers die jeweilige Mess- und Prüfeinrichtung gemäß den in dem Benutzerprofil hinterlegten Informationen eingestellt werden kann. Ein Benutzer findet somit die jeweilige Mess- und Prüfeinrichtung nach der Authentifizierung sofort in seiner gewünschten Konfiguration vor und kann daraufhin sofort mit seiner Arbeit beginnen. Auf diese Weise wird die Zeit für die Konfiguration der Mess- und Prüfeinrichtung signifikant gesenkt und mögliche Fehler aufgrund einer falschen Einstellung bei einer Neukonfiguration können vermieden werden. Wie zuvor bereits beschrieben, können ggf. auch mehrere unterschiedliche Einstellungen in einem Benutzerprofil eines authentifizierten Benutzers abgelegt werden. In diesem Fall kann ein Benutzer nach seiner Authentifizierung eine der möglichen Einstellungen auswählen, welche daraufhin sofort automatisch in der jeweiligen Mess- und Prüfeinrichtung eingestellt wird.

Da die Einstellung der Mess- und Prüfeinrichtung hierbei unmittelbar mit der Authentifizierung eines Benutzers verknüpft ist, kann die Konfiguration und die Einstellung der Mess- und Prüfeinrichtung durch einen anderen Benutzer vermieden werden. Auf diese Weise kann sichergestellt werden, dass ein fremder Benutzer nicht versehentlich oder ggf. auch absichtlich die Einstellungen eines authentifizierten Benutzers manipuliert. Somit können mögliche Fehleinstellungen durch andere Benutzer vermieden werden.

Die Steuereinrichtung ist dazu ausgelegt, Konfigurationsdaten der Mess- und Prüfeinrichtung auszulesen. Anschließend kann die Steuereinrichtung ein Benutzerprofil unter Verwendung der ausgelesenen Konfigurationsdaten erstellen. Die ausgelesenen Konfigurationsdaten können hierbei eine vollständige Einstellung der Mess- und Prüfeinrichtung umfassen.

Insbesondere kann dabei sowohl die Konfiguration einer ggf. vorhandenen graphischen Benutzerschnittstelle eingeschlossen werden. Darüber hinaus sind auch beliebige weitere Parameter für die Einstellung der Mess- und Prüfeinrichtung sowie ggf. auch in eventuell vorhandenen Zwischenspeichern abgelegte Informationen in dem jeweiligen Benutzerprofil abspeicherbar. Darüber hinaus ist es jedoch auch möglich, das Auslesen und Abspeichern von Konfigurationsdaten der Mess- und Prüfeinrichtung auf vorgegebene Informationen zu begrenzen. Beispielsweise kann ggf. nur eine Konfiguration der graphischen Benutzerschnittstelle in dem Benutzerprofil abgespeichert werden, während weitere Konfigurationsdaten nicht mit dem Benutzerprofil verknüpft werden. Auf diese Weise kann beispielsweise nach einer Authentifizierung des Benutzers automatisch die graphische Benutzerschnittstelle an die Wünsche des Benutzers angepasst werden, während die übrigen Einstellungen auch nach der Authentifizierung nicht verändert werden. Somit können beispielsweise ggf. durch einen anderen Benutzer zuvor vorgenommene Parametrisierungen der Mess- und Prüfeinrichtung beibehalten werden, während die Darstellung der graphischen Benutzerschnittstelle an die Wünsche oder Erfordernisse des authentifizierten Benutzers angepasst werden. Selbstverständlich sind darüber hinaus auch beliebige andere Teile der Konfigurationsdaten einer Mess- und Prüfeinrichtung in dem Benutzerprofil abspeicherbar.

In einer möglichen Ausführungsform umfasst das Benutzerprofil Einstellungen für die grafische Benutzerschnittstelle, Einstellungen für eine Erfassung von Messwerten, Einstellungen für eine Erzeugung von Messsignalen, eine Parametrisierung von Rechenvorschriften, eine Auswahl von Algorithmen oder Skripten und/oder eine benutzerspezifische Rechtevergabe.

Auf diese Weise können die jeweiligen Einstellungen oder Erfordernisse eines Benutzers in dem Benutzerprofil abgespeichert und bei Bedarf wieder aufgerufen werden, sodass die Mess- und Prüfeinrichtung automatisch an die Erfordernisse eines Benutzers angepasst werden kann. Insbesondere können beispielsweise auch durch einen Benutzer erstellte Abläufe, Skripte oder ähnliches ebenfalls in dem Benutzerprofil hinterlegt werden und bei Bedarf abgerufen werden. Somit stehen diese Daten ebenfalls sofort nach einer Authentifizierung des Benutzers an der jeweiligen Mess- und Prüfeinrichtung zur Verfügung. Durch eine Rechtevergabe in dem Benutzerprofil ist es möglich, den Funktionsumfang der Mess- und Prüfeinrichtung einzuschränken. Insbesondere kann die Mess- und Prüfeinrichtung hierdurch beispielsweise an die Kenntnisse oder den Ausbildungsstand eines Benutzers angepasst werden. Hierdurch kann sichergestellt werden, dass ein unerfahrener Benutzer nicht ggf. durch eine fehlerhafte Einstellung eine Beschädigung der Mess- und Prüfeinrichtung oder einer angeschlossenen Komponente hervorruft. Gegebenenfalls ist es durch die Rechtevergabe auch möglich, die Konfiguration der Mess- und Prüfeinrichtung durch einen bestimmten Benutzer auf vorgegebene Parameter zu begrenzen oder für weitere vorgegebene Parameter ggf. nur Standardwerte vorzusehen.

In einer möglichen Ausführungsform ist die Authentifizierungseinrichtung dazu ausgelegt, die Authentifizierung eines Benutzers mittels Benutzername und Passwort auszuführen. Ferner kann die Authentifizierungseinrichtung die Authentifizierung auch basierend auf einer biometrischen Authentifizierung, insbesondere basierend auf einem Fingerabdruck, einer Gesichtserkennung, einem Iris-Scan, einer Stimmerkennung oder ähnlichem ausführen. Ferner ist auch eine Authentifizierung mittels eines gegenständlichen Zugangsschlüssels, beispielsweise eines Dongles, eines USB-Sticks mit einer benutzerspezifischen Datei oder ähnlichem möglich. Darüber hinaus kann die Authentifizierung auch mittels eines benutzerspezifischen Zugangscodes oder ähnlichem erfolgen. Selbstverständlich sind darüber hinaus auch beliebige weitere Möglichkeiten zur Authentifizierung eines Benutzers möglich. Soll die Authentifizierung eines Benutzers jedoch nicht besonders geschützt sein, so ist ggf. auch die Eingabe eines Benutzernamens oder einer Kennung ohne weitere Sicherheitsmaßnahmen möglich.

In einer möglichen Ausführungsform ist die Steuereinrichtung dazu ausgelegt, Einstellungen der Mess- und Prüfeinrichtung in Abhängigkeit einer Rechtevorgabe in dem Benutzerprofil einzuschränken.

Beispielsweise können in Abhängigkeit von der Rechtevorgabe in dem Benutzerprofil einzelne Funktionen der Mess- und Prüfeinrichtung gesperrt, freigegeben oder nur eingeschränkt freigegeben werden, oder es ist möglich die Parametrisierung eines Messvorgangs oder für die Erzeugung eines Messsignals auf vorgegebene Grenzen zu beschränken. Darüber hinaus sind selbstverständlich auch beliebige weitere Einschränkungen oder Freigaben in Abhängigkeit einer Rechtevorgabe in dem Benutzerprofil möglich.

In einer möglichen Ausführungsform umfasst das Mehrbenutzer-Testsystem eine Administrationseinrichtung. Die Administrationseinrichtung kann dazu ausgelegt sein, ein Benutzerprofil aus einer Profildatenbank auszulesen, das Benutzerprofil zu modifizieren und/oder das Benutzerprofil in der Profildatenbank abzuspeichern. Auf diese Weise kann die in dem Benutzerprofil hinterlegte Information durch die zusätzliche Administrationseinrichtung auch ohne direkte Verbindung der Mess- und Prüfeinrichtung angepasst werden. Darüber hinaus können ggf. mittels der Administrationseinrichtung auch weitere Vorgaben oder Einschränkungen in dem Benutzerprofil hinterlegt werden, die ggf. auch nicht direkt an der Mess- und Prüfeinrichtung vorgenommen werden können.

In einer möglichen Ausführungsform ist die Administrationseinrichtung dazu ausgelegt, eine Mehrzahl von Benutzerprofilen gemeinsam zu modifizieren.

Beispielsweise können mehrere Benutzerprofile auch einer gemeinsamen Gruppe zugewiesen werden, sodass für eine solche Benutzergruppe gemeinsame Einstellungen vorgenommen werden können. Auf diese Weise kann eine besonders effiziente und schnelle Konfiguration mehrerer Benutzerprofile erfolgen. Darüber hinaus ist es beispielsweise auch möglich, ein Benutzerprofil zu kopieren, von einer Benutzergruppe in eine andere Benutzergruppe zu verschieben oder weitere Modifikationen in dem Benutzerprofil auszuführen.

Das Mehrbenutzer-Testsystem ist jedoch nicht auf eine einzelne Mess- und Prüfeinrichtung beschränkt. Vielmehr ist es auch möglich, eine beliebige Anzahl von einer oder mehrerer Mess- und Prüfeinrichtungen vorzusehen. In diesem Fall können alle Mess- und Prüfeinrichtungen des Mehrbenutzer-Testsystems ggf. auf eine gemeinsame Profildatenbank zugreifen. Somit können beispielsweise alle Mess- und Prüfeinrichtungen des Mehrbenutzer-Testsystems entsprechend den in dem Benutzerprofil abgespeicherten Informationen automatisch konfiguriert werden. Somit ist es beispielsweise möglich, dass ein Benutzer zu einem ersten Zeitpunkt mit einer ersten Mess- und Prüfeinrichtung arbeitet. Zu einem späteren Zeitpunkt kann sich der Benutzer an einer weiteren Mess- und Prüfeinrichtung authentifizieren. Daraufhin werden automatisch die Einstellungen aus der Profildatenbank ausgelesen und an dieser weiteren Mess- und Prüfeinrichtung eingestellt, sodass der Benutzer auch die weitere Mess- und Prüfeinrichtung in seiner gewohnten Konfiguration vorfindet. Das Mehrbenutzer-Testsystem ist hierbei auch nicht auf mehrere identische Mess- und Prüfeinrichtungen beschränkt. Vielmehr ist es auch möglich, mehrere zumindest teilweise unterschiedliche Mess- und Prüfeinrichtungen in einem Mehrbenutzer-Testsystem einzusetzen. Hierbei können ggf. zumindest Teile der einzelnen Mess- und Prüfeinrichtungen gleich oder gleichartig ausgeführt sein. Insbesondere können beispielsweise bei mehreren ansonsten unterschiedlichen Mess- und Prüfeinrichtungen auch Anzeigen mit einer graphischen Benutzerschnittstelle vorgesehen sein. In diesem Falle kann beispielsweise die Vorgabe für die graphische Benutzerschnittstelle aus dem Benutzerprofil ausgelesen werden und die jeweilige graphische Benutzerschnittstelle der entsprechenden Mess- und Prüfeinrichtung kann daraufhin gemäß den Benutzervorgaben angepasst werden.

In einer möglichen Ausführungsform des Verfahrens zur Konfiguration eines Mehrbenutzer-Testsystems umfasst das Verfahren ferner die Schritte eines Auslesens einer Konfiguration der Mess- und Prüfeinrichtung, des Erstellens eines Benutzerprofils unter Verwendung der ausgelesenen Konfiguration und des Speicherns des Benutzerprofils in einer Profildatenbank.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu der jeweiligen Grundform der Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Fig. 1:: eine schematische Darstellung eines Mehrbenutzer-Testsystems gemäß einer Ausführungsform; und
- Fig. 2:: ein Ablaufdiagramm wie es einem Verfahren zur Konfiguration eines Mehrbenutzer-Testsystems gemäß einer Ausführungsform zugrunde liegt.

### Ausführungsformen der Erfindung

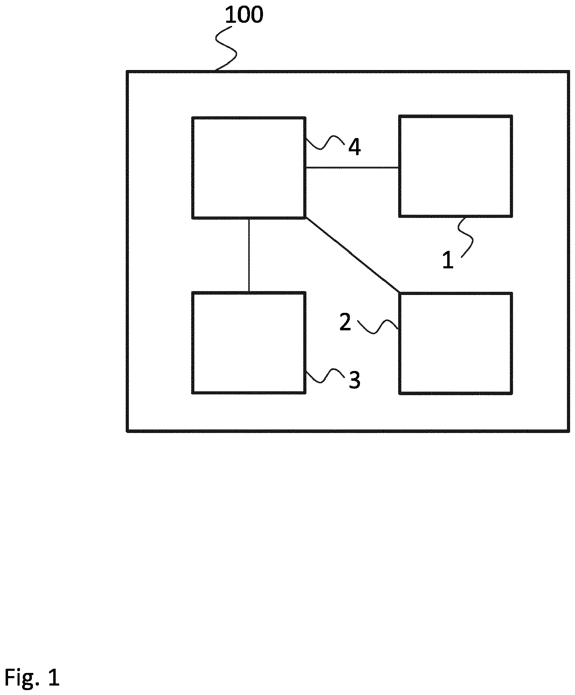

Fig. 1 zeigt ein Blockschaltbild eines Mehrbenutzer-Testsystems 100 gemäß einer Ausführungsform. Das Mehrbenutzer-Testsystem umfasst eine Anzahl von einer oder mehreren Mess- und Prüfeinrichtungen 1. Ferner umfasst das Mehrbenutzer-Testsystem 100 eine Anzahl von einer oder mehreren Authentifizierungseinrichtungen 2 und Steuereinrichtungen 4. Darüber hinaus umfasst das Mehrbenutzer-Testsystem 100 mindestens eine Profildatenbank 3. Insbesondere kann für jede Mess- und Prüfeinrichtung 1 eine separate Authentifizierungseinrichtung 2 und eine separate Steuereinrichtung 4 vorgesehen sein. Mess- und Prüfeinrichtung 1, Authentifizierungseinrichtung 2, Profildatenbank 3 und Steuereinrichtung 4 können in einer gemeinsamen Einheit als ein gemeinsames Gerät vorgesehen sein. Es ist jedoch auch möglich, dass die einzelnen Komponenten, insbesondere die Profildatenbank 3 räumlich getrennt voneinander angeordnet sind. Die einzelnen Komponenten können hierbei über beliebige Kommunikationsschnittstellen kabelgebunden oder kabellos miteinander kommunizieren.

Ein Benutzer kann sich an der Authentifizierungseinrichtung 2 mittels einer beliebigen, geeigneten Methode authentifizieren. Beispielsweise kann sich der Benutzer mittels eines Benutzernamens und eines korrespondierenden Passworts anmelden. Auch eine Authentifizierung mittels einer speziellen Codesequenz (z.B. einer persönlichen Identifikationsnummer, PIN) oder ähnlichem ist möglich. Ferner kann zur Authentifizierung auch ein gegenständliches Authentifizierungselement, wie z.B. ein Dongle, ein USB-Stick mit einer benutzerspezifischen Datei oder ähnlichem herangezogen werden. Darüber hinaus sind auch beliebige biometrische Authentifizierungsverfahren, wie z.B. ein Fingerabdruckscanner, eine Gesichtserkennung, eine Iriserkennung, eine Spracherkennung oder ähnliches möglich. Darüber hinaus sind selbstverständlich auch weitere beliebige Verfahren zur Authentifizierung eines Benutzers möglich. Wenn kein besonderer Schutz der Daten erforderlich ist, so ist es ggf. auch ausreichend, dass sich der Benutzer nur durch Eingabe eines Benutzernamens oder einer anderen benutzerspezifischen Kennung oder ähnlichem authentifiziert.

Ein Benutzer kann während des Betriebs einer Mess- und Prüfeinrichtung 1 beliebige benutzerspezifische Einstellungen vornehmen. Beispielsweise kann er für einen vorgegebenen Prüfauftrag einzelne Parameter an der Mess- und Prüfeinrichtung 1 einstellen. Darüber hinaus kann er ggf. auch beliebige Prüfabläufe, Skripte oder ähnliches erstellen oder mittels eines Datenträgers, einer Netzwerkverbindung o.ä. in der Mess- und Prüfeinrichtung 1 einspielen. Auch die Eingabe von Rechenvorschriften, Algorithmen oder beliebigen weiteren Daten ist möglich. Beispielsweise kann der Benutzer auch persönliche Notizen in Zusammenhang mit der Benutzung der Mess- und Prüfeinrichtung eingeben und in der Mess- und Prüfeinrichtung 1 hinterlegen. Darüber hinaus kann der Benutzer auch individuelle Einstellungen an einer graphischen Benutzeroberfläche der Mess- und Prüfeinrichtung 1 vornehmen. Auf diese Weise kann der Benutzer die Mess- und Prüfeinrichtung 1 ganz individuell an seine persönlichen Bedürfnisse anpassen.

Die Steuereinrichtung 4 kann die durch den Benutzer vorgenommenen Einstellungen in der Mess- und Prüfeinrichtung 1 auslesen und basierend auf diesen ausgelesenen Daten ein individuelles Benutzerprofil für den authentifizierten Benutzer erstellen. Hierbei können ggf. sämtliche durch die Steuereinrichtung 4 ausgelesenen Daten in dem Benutzerprofil hinterlegt werden. Es ist jedoch auch möglich, das Benutzerprofil auf bestimmte Teilbereiche einzuschränken. Beispielsweise können nur die Konfigurationen der graphischen Benutzerschnittstelle ausgelesen und in dem Benutzerprofil hinterlegt werden. Darüber hinaus können auch beliebige andere Teile, wie z.B. persönliche Notizen, individuelle Skripte für einen Ablauf oder ähnliches ausgelesen und in dem Benutzerprofil hinterlegt werden. Darüber hinaus können auch beliebige andere Teile der Konfiguration oder der in der Mess- und Prüfeinrichtung hinterlegten Daten mit in das Benutzerprofil aufgenommen werden. Insbesondere können auch ggf. einem Benutzer spezifische Rechte zugewiesen werden, sodass der Benutzer eventuell einige oder alle Funktionen der Mess- und Prüfeinrichtung 1 nur eingeschränkt oder gar nicht ausführen kann. Ferner kann das Benutzerprofil auch beliebige weitere Informationen umfassen. Nachdem die Steuereinrichtung 4 ein Benutzerprofil für einen authentifizierten Benutzer erstellt hat, kann dieses Benutzerprofil, ggf. zusammen mit den Authentifizierungsdaten des Benutzers in der Profildatenbank 3 abgespeichert werden. Das Abspeichern des Benutzerprofils kann dabei in einer beliebigen geeigneten Form, beispielsweise als Textdatei, als komprimierte Binärdatei oder ähnliches abgespeichert werden. Bei Bedarf kann das Benutzerprofil hierbei auch in verschlüsselter Form in der Profildatenbank 3 abgespeichert werden.

Gegebenenfalls kann auf die in der Profildatenbank 3 abgespeicherten Benutzerprofile auch mittels einer weiteren (hier nicht dargestellten) Administrationseinrichtung zugegriffen werden. Auf diese Weise können die einzelnen Benutzerprofile verwaltet, angepasst und modifiziert werden. Insbesondere ist dabei auch eine Anpassung von möglichen Rechten für einen Benutzer, eine Gruppierung mehrerer Benutzer zu einer gemeinsamen Benutzergruppe, eine Kopie eines Benutzerprofils für einen neu zu erstellenden Benutzer oder ähnliches möglich.

Meldet sich ein Benutzer mittels einer Authentifizierungseinrichtung 2 an einer Mess- und Prüfeinrichtung 1 an, für den in der Profildatenbank 3 bereits ein Benutzerprofil abgespeichert ist, so kann die Steuereinrichtung 4 für einen solchen authentifizierten Benutzer automatisch das korrespondierende Benutzerprofil aus der Profildatenbank 3 auslesen. Nachdem die Steuereinrichtung 4 ein Benutzerprofil eines authentifizierten Benutzers aus der Profildatenbank 3 ausgelesen hat, kann die Steuereinrichtung 4 das Benutzerprofil auswerten und daraufhin die jeweilige Mess- und Prüfeinrichtung 1 unter Verwendung der in dem Benutzerprofil hinterlegten Informationen konfigurieren. Beispielsweise kann somit nach der Authentifizierung eines Benutzers die Mess- und Prüfeinrichtung vollständig so konfiguriert werden, wie sie ein Benutzer bei seiner letzten Benutzung verlassen hat. Somit steht die Mess- und Prüfeinrichtung 1 für einen Benutzer unmittelbar nach der Authentifizierung wieder in einem für ihn angepassten Zustand zur Verfügung, selbst wenn zwischenzeitlich ein oder mehrere weitere Benutzer Änderungen an der Mess- und Prüfeinrichtung 1 vorgenommen haben.

Die Steuereinrichtung 4 kann nach der Authentifizierung eines Benutzers die Mess- und Prüfeinrichtung 1 entsprechend dem in der Profildatenbank 3 abgespeicherten Benutzerprofil einstellen und konfigurieren. Die Einstellung kann insbesondere auch die Anpassung einer graphischen Benutzerschnittstelle umfassen. Somit findet sich der Benutzer an der entsprechend angepassten graphischen Benutzerschnittstelle der Mess- und Prüfeinrichtung 1 sofort zurecht. Auch weitere benutzerspezifische Daten können aus dem Benutzerprofil übernommen und nach der Authentifizierung automatisch durch die Steuereinrichtung 4 an der Mess- und Prüfeinrichtung 1 eingestellt werden. Beispielsweise können benutzerspezifische Skripte oder Testabläufe, persönliche Notizen zu Testabläufen, Parametrisierungen einer Mess- und Prüfeinrichtung 1 oder ähnliches in dem Benutzerprofil hinterlegt werden, sodass diese Informationen durch die Steuereinrichtung 4 ausgewertet werden, um die Mess- und Prüfeinrichtung 1 nach der Authentifizierung sofort automatisch entsprechend anzupassen.

Sofern das Mehrbenutzer-Testsystem 100 mehrere Mess- und Prüfeinrichtungen 1 umfasst, so können auch benutzerspezifische Einstellungen aus dem Benutzerprofil von einer ersten Mess- und Prüfeinrichtung 1 an einer weiteren Mess- und Prüfeinrichtung 1 übernommen werden. Somit ist ein Benutzer nicht an eine einzige Mess- und Prüfeinrichtung 1 gebunden, sondern kann vielmehr zwischen mehreren gleichen oder gleichartigen Mess- und Prüfeinrichtungen 1 wechseln.

Selbst wenn das Mehrbenutzer-Testsystem 100 mehrere verschiedenartige Mess- und Prüfeinrichtungen 1 umfasst, so können ggf. zumindest Teile der in dem Benutzerprofil hinterlegten Informationen für eine Konfiguration der jeweiligen Mess- und Prüfeinrichtung 1 übernommen werden. So können z.B. auch bei unterschiedlichen Mess- und Prüfeinrichtungen 1 die jeweiligen graphischen Benutzerschnittstellen an die in dem Benutzerprofil hinterlegten Konfigurationen angepasst werden. Somit steht dem Benutzer auch bei mehreren unterschiedlichen Mess- und Prüfeinrichtungen eine einheitliche oder zumindest annähernd einheitliche graphische Benutzerschnittstelle zur Verfügung, wodurch die Benutzung der jeweiligen Mess- und Prüfeinrichtung 1 signifikant erleichtert werden kann.

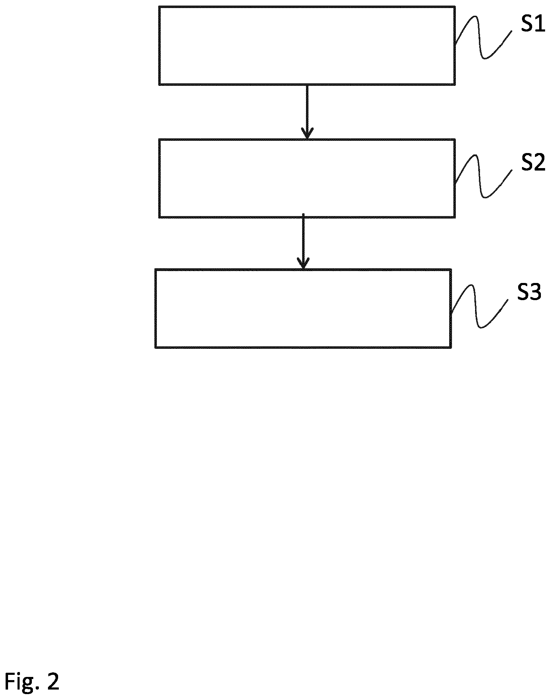

Fig. 2 zeigt ein Ablaufdiagramm, wie es einem Verfahren zur Konfiguration eines Mehrbenutzer-Testsystems gemäß einer Ausführungsform zugrunde liegt.

In Schritt S1 erfolgt ein Authentifizieren eines Benutzers. Die Authentifizierung kann hierbei durch eine beliebige, wie zuvor bereits beschriebene, Weise erfolgen. In Schritt S2 erfolgt ein Auslesen eines Benutzerprofils eines authentifizierten Benutzers aus einer Profildatenbank 3. In Schritt S3 erfolgt daraufhin ein automatisches Einstellen einer Mess- und Prüfeinrichtung 1 unter Verwendung des ausgelesenen Benutzerprofils.

Darüber hinaus kann das Verfahren auch einen Schritt zum Auslesen einer Konfiguration der Mess- und Prüfeinrichtung 1 umfassen. Unter Verwendung der ausgelesenen Konfiguration der Mess- und Prüfeinrichtung 1 kann ein Benutzerprofil erstellt werden, und das Benutzerprofil kann daraufhin in einer Profildatenbank 3 gespeichert werden.

Zusammenfassend betrifft die vorliegende Erfindung eine automatische Konfiguration einer Mess- und Prüfeinrichtung in einem Mehrbenutzer-Testsystem. Einzelne Benutzer werden hierbei zunächst authentifiziert. Für authentifizierte Benutzer kann ein individuelles Benutzerprofil erstellt werden. Das individuelle Benutzerprofil kann in einer Benutzerdatenbank abgespeichert werden. Nach einer Authentifizierung eines Benutzers kann das Benutzerprofil aus der Profildatenbank ausgelesen werden und daraufhin kann automatisch eine Mess- und Prüfeinrichtung entsprechend dem Benutzerprofil eingestellt werden.

## Patentansprüche

1. Mehrbenutzer-Testsystem (100), mit:
einer Mess- und Prüfeinrichtung (1), die dazu ausgelegt ist, vorbestimmte Mess- und Prüfoperationen auszuführen;
einer Authentifizierungseinrichtung (2), die dazu ausgelegt ist, einen Benutzer zu authentifizieren;
einer Profildatenbank (3), die dazu ausgelegt ist, Benutzerprofile, welche Einstellungen, Parametrisierungen und/oder Konfigurationen des jeweiligen Benutzers auf der Mess- und Prüfeinrichtung (1) umfassen, abzuspeichern und bereitzustellen;
einer Steuereinrichtung (4), die dazu ausgelegt ist, ein Benutzerprofil für einen authentifizierten Benutzer zu erstellen und in der Profildatenbank (3) abzuspeichern, und ein Benutzerprofil für einen authentifizierten Benutzer aus der Profildatenbank (3) auszulesen und die Mess- und Prüfeinrichtung (1) unter Verwendung des ausgelesenen Benutzerprofils einzustellen,
wobei die Steuereinrichtung (4) dazu ausgelegt ist, Konfigurationsdaten der Mess- und Prüfeinrichtung (1) auszulesen und ein Benutzerprofil unter Verwendung der ausgelesenen Konfigurationsdaten zu erstellen, und das Benutzerprofil für einen authentifizierten Benutzer beim Abmelden und/oder einem Wechsel des Benutzers automatisch in der Profildatenbank abzuspeichern.

2. Mehrbenutzer-Testsystem (100) nach Anspruch 1, wobei die Steuereinrichtung (4) dazu ausgelegt ist, nach einer Authentifizierung eines Benutzers das Benutzerprofil des authentifizierten Benutzers automatisch auszulesen und die Mess- und Prüfeinrichtung (1) unter Verwendung des ausgelesenen Benutzerprofils einzustellen.

3. Mehrbenutzer-Testsystem (100) nach Anspruch 1 oder 2, wobei das Benutzerprofil Einstellung für eine grafischen Benutzerschnittstelle, für eine Erfassung von Messwerten, für eine Erzeugung von Messsignalen, eine Parametrisierung von Rechenvorschriften, eine Auswahl von Algorithmen und/oder eine Rechtevergabe umfasst.

4. Mehrbenutzer-Testsystem (100) nach einem der Ansprüche 1 bis 3, wobei die Authentifizierungseinrichtung (2) dazu ausgelegt ist, die Authentifizierung mittels Benutzername und Passwort, einer biometrischen Authentifizierung, einer Authentifizierung mittels eines gegenständlichen Zugangsschlüssels und/oder einer Authentifizierung mittels eines Zugangscodes auszuführen.

5. Mehrbenutzer-Testsystem (100) nach einem der Ansprüche 1 bis 4, wobei die Steuereinrichtung (4) dazu ausgelegt ist, Einstellungen der Mess- und Prüfeinrichtung (1) in Abhängigkeit einer Rechtevorgabe in dem Benutzerprofil einzuschränken.

6. Mehrbenutzer-Testsystem (100) nach einem der Ansprüche 1 bis 5, mit einer Administrationseinrichtung, die dazu ausgelegt ist, ein Benutzerprofil aus der Profildatenbank (3) auszulesen, ein Benutzerprofil zu modifizieren und/oder ein Benutzerprofil in der Profildatenbank (3) abzuspeichern.

7. Mehrbenutzer-Testsystem (100) nach Anspruch 6, wobei die Administrationseinrichtung dazu ausgelegt ist, eine Mehrzahl von Benutzerprofilen gemeinsam zu modifizieren.

8. Verfahren zur Konfiguration eines Mehrbenutzer-Testsystems (100), mit den Schritten:
Authentifizieren (S1) eines Benutzers;
Auslesen (S2) eines Benutzerprofils des authentifizierten Benutzers, welches Einstellungen, Parametrisierungen und/oder Konfigurationen des jeweiligen Benutzers auf der Mess- und Prüfeinrichtung (1) umfasst; und
Einstellen (S3) einer Mess- und Prüfeinrichtung (1) unter Verwendung des ausgelesenen Benutzerprofils;
Auslesen einer Konfiguration der Mess- und Prüfeinrichtung (1);
Erstellen eines Benutzerprofils unter Verwendung der ausgelesenen Konfiguration; und
Speichern des Benutzerprofils in einer Profildatenbank (3),
wobei das Speichern des Benutzerprofils ein automatisches Speichern des Benutzerprofils des authentifizierten Benutzers beim Abmelden und/oder bei einem Wechsel des Benutzers umfasst.

## Claims

1. Multi-user test system (100), comprising:
a measuring and testing device (1) which is designed to carry out predetermined measuring and testing operations;
an authentication device (2) which is designed to authenticate a user;
a profile database (3) which is designed to store and provide user profiles comprising settings, parameterizations and/or configurations of the relevant user on the measuring and testing device (1);
a control device (4) which is designed to create a user profile for an authenticated user and to store it in the profile database (3), and to read out a user profile for an authenticated user from the profile database (3) and to set the measuring and testing device (1) using the read-out user profile,
the control device (4) being designed to read out configuration data of the measuring and testing device (1) and to create a user profile using the read-out configuration data, and to automatically store the user profile for an authenticated user in the profile database when the user logs out and/or changes.

2. Multi-user test system (100) according to claim 1, the control device (4) being designed to automatically read out the user profile of the authenticated user after authenticating a user and to set the measuring and testing device (1) using the read-out user profile.

3. Multi-user test system (100) according to claim 1 or 2, the user profile comprising settings for a graphical user interface, for detecting measurement values, for generating measurement signals, a parameterization of calculation rules, a selection of algorithms and/or an assignment of rights.

4. Multi-user test system (100) according to any of claims 1 to 3, the authentication device (2) being designed to perform authentication by means of user name and password, biometric authentication, authentication by means of a representational access key and/or authentication by means of an access code.

5. Multi-user test system (100) according to any of claims 1 to 4, the control device (4) being designed to restrict settings of the measuring and testing device (1) depending on a rights specification in the user profile.

6. Multi-user test system (100) according to any of claims 1 to 5, comprising an administration device designed to read out a user profile from the profile database (3), to modify a user profile and/or to store a user profile in the profile database (3).

7. Multi-user test system (100) according to claim 6, the administration device being designed to modify a plurality of user profiles collectively.

8. Method for configuring a multi-user test system (100), comprising the steps of:
authenticating (S1) a user;
reading out (S2) a user profile of the authenticated user, which profile comprises settings, parameterizations and/or configurations of the relevant user on the measuring and testing device (1); and
setting (S3) a measuring and testing device (1) using the read-out user profile;
reading out a configuration of the measuring and testing device (1);
creating a user profile using the read-out configuration; and
storing the user profile in a profile database (3),
storing the user profile comprising automatically storing the user profile of the authenticated user when the user logs out and/or changes.

## Revendications

1. Système de test multi-utilisateurs (100), comportant :
un dispositif de mesure et de contrôle (1) conçu pour exécuter des opérations de mesure et de contrôle prédéterminées ;
un dispositif d'authentification (2) conçu pour authentifier un utilisateur ;
une base de données de profils (3) conçue pour mémoriser et fournir des profils d'utilisateur qui comprennent des réglages, des paramétrages et/ou des configurations de l'utilisateur respectif sur le dispositif de mesure et de contrôle (1) ;
un dispositif de commande (4) conçu pour créer un profil d'utilisateur pour un utilisateur authentifié et pour le mémoriser dans la base de données de profils (3), et pour lire un profil d'utilisateur pour un utilisateur authentifié dans la base de données de profils (3) et pour régler le dispositif de mesure et de contrôle (1) à l'aide du profil d'utilisateur lu,
dans lequel le dispositif de commande (4) est conçu pour lire des données de configuration du dispositif de mesure et de contrôle (1) et pour créer un profil d'utilisateur à l'aide des données de configuration lues, et pour mémoriser automatiquement le profil d'utilisateur pour un utilisateur authentifié dans la base de données de profils lors de la fermeture de session et/ou d'un changement d'utilisateur.

2. Système de test multi-utilisateurs (100) selon la revendication 1, dans lequel le dispositif de commande (4) est conçu pour, après une authentification d'un utilisateur, lire automatiquement le profil d'utilisateur de l'utilisateur authentifié et pour régler le dispositif de mesure et de contrôle (1) à l'aide du profil d'utilisateur lu.

3. Système de test multi-utilisateurs (100) selon la revendication 1 ou 2, dans lequel le profil d'utilisateur comprend un réglage pour une interface utilisateur graphique, pour une saisie de valeurs de mesure, pour une génération de signaux de mesure, un paramétrage de règles de calcul, une sélection d'algorithmes et/ou une attribution de droits.

4. Système de test multi-utilisateurs (100) selon l'une des revendications 1 à 3, dans lequel le dispositif d'authentification (2) est conçu pour exécuter l'authentification par nom d'utilisateur et mot de passe, une authentification biométrique, une authentification par clé d'accès en objet et/ou une authentification par code d'accès.

5. Système de test multi-utilisateurs (100) selon l'une des revendications 1 à 4, dans lequel le dispositif de commande (4) est conçu pour limiter les réglages du dispositif de mesure et de contrôle (1) en fonction d'une attribution de droits dans le profil d'utilisateur.

6. Système de test multi-utilisateurs (100) selon l'une des revendications 1 à 5, comportant un dispositif d'administration conçu pour lire un profil d'utilisateur dans la base de données de profils (3), pour modifier un profil d'utilisateur et/ou pour mémoriser un profil d'utilisateur dans la base de données de profils (3).

7. Système de test multi-utilisateurs (100) selon la revendication 6, dans lequel le dispositif d'administration est conçu pour modifier conjointement une pluralité de profils d'utilisateurs.

8. Procédé pour la configuration d'un système de test multi-utilisateurs (100), comportant les étapes consistant à :
authentifier (S1) un utilisateur ;
lire (S2) un profil d'utilisateur de l'utilisateur authentifié, lequel comprend des réglages, des paramétrages et/ou des configurations de l'utilisateur respectif sur le dispositif de mesure et de contrôle (1) ; et
régler (S3) un dispositif de mesure et de contrôle (1) à l'aide du profil d'utilisateur lu ;
lire une configuration du dispositif de mesure et de contrôle (1) ;
créer un profil d'utilisateur à l'aide de la configuration lue ; et
enregistrer le profil d'utilisateur dans une base de données de profils (3),
dans lequel l'enregistrement du profil d'utilisateur comprend une mémorisation automatique du profil d'utilisateur de l'utilisateur authentifié lors de la déconnexion et/ou d'un changement d'utilisateur.
